# EUROPEAN PATENT APPLICATION

(11) **EP 4 726 465 A1**
(43) Date of publication of application: **15.04.2026**
(21) Application number: 25186156.3
(22) Date of filing: 30.06.2025
(51) Int. Cl.: G02F 1/1362, G02F 1/13363, G02B 27/01

(54) **COMPENSATION FOR LIQUID CRYSTAL ON SILICON DISPLAYS**

(30) Priority: 08.10.2024 US 202418908804
(71) Applicant: Meta Platforms Technologies, LLC, Menlo Park, CA 94025 (US)
(72) Inventor: Yan, Jin, Menlo Park (US); Isikman, Serhan, Menlo Park (US); Nothern III, Alga Lloyd, Menlo Park (US)
(74) Representative: Murgitroyd & Company

(57) **Abstract**

A Liquid Crystal on Silicon (LCOS) system includes an illumination module, an LCOS, and an LCOS compensator. The illumination module is configured to generate illumination light. The LCOS is configured to receive the illumination light and modulate the illumination light into display light. The LCOS compensator may have a slow axis aligned to between -33 degrees and -77 degrees. The LCOS compensator is configured to receive the illumination light and the display light.

## Description

### TECHNICAL FIELD

This disclosure relates generally to display technologies, and in particular to Liquid Crystal on Silicon (LCOS) displays.

### BACKGROUND

Modern display technologies include liquid crystal displays (LCD) panels, projectors, organic light emitting diode (OLED) arrays, Liquid Crystal on Silicon (LCOS) displays, and even transparent displays. Common performance metrics of displays include brightness and contrast measurements. Certain display technologies are better suited for different contexts based on size, power, and desirable performance metrics.

### SUMMARY

According to a first aspect, there is provided a Liquid Crystal on Silicon (LCOS) system comprising: an illumination module configured to generate illumination light; an LCOS configured to receive the illumination light and modulate the illumination light into display light; and an LCOS compensator having a slow axis aligned to between -33 degrees and -77 degrees, wherein the LCOS compensator is configured to receive the illumination light and the display light.

The illumination light may have a first linear polarization orientation. The display light may have a second linear polarization orientation orthogonal to the first linear polarization orientation.

The LCOS compensator may be actively aligned. The slow axis of the LCOS compensator may be actively aligned.

The slow axis of the LCOS compensator may be actively aligned to between -48 degrees and -77 degrees.

The slow axis of the LCOS compensator may be actively aligned to approximately -60 degrees.

The slow axis of the LCOS compensator may be actively aligned to approximately -65 degrees.

The LCOS compensator may be passively aligned. The slow axis of the LCOS compensator may be passively aligned. The slow axis of the LCOS compensator may be passively aligned to between -33 degrees and -57 degrees.

The LCOS system may further comprise a driver module configured to: drive a red drive voltage onto the LCOS for generating a red image; drive a green drive voltage onto the LCOS for generating a green image; and drive a blue drive voltage onto the LCOS for generating a blue image. The red drive voltage, the green drive voltage, and the blue drive voltage may be calibrated to increase a contrast of the red image, the green image, and the blue image, respectively.

The blue drive voltage may be higher than the green drive voltage. The green drive voltage may be higher than the red drive voltage. The blue drive voltage may be higher than the red drive voltage.

The red drive voltage, the green drive voltage, and the blue drive voltage may be a function of a mechanical orientation of the LCOS compensator with respect to the LCOS.

The red drive voltage, the green drive voltage, and the blue drive voltage may be calibrated over a temperature range of the LCOS system.

The LCOS compensator may be laminated to the LCOS.

The LCOS system may further comprise a polarized beam splitter (PBS) configured to receive the illumination light and direct the illumination light to the LCOS. The LCOS compensator may be disposed between the PBS and the LCOS.

According to a second aspect, there is provided a head-mounted display (HMD) comprising: the LCOS system of the first aspect; and a waveguide system configured to receive the display light generated by the LCOS, wherein the waveguide system is configured to direct virtual images included in the display light to an eyebox region.

According to a third aspect, there is provided a method comprising: emitting, with an illumination system, illumination light; receiving the illumination light with an LCOS system including an LCOS and an LCOS compensator having a slow axis, wherein the illumination light propagates through the LCOS compensator to the LCOS; and driving a calibrated voltage onto the LCOS to increase a contrast of display light, wherein driving the calibrated voltage onto the LCOS modulates the illumination light into display light that propagates back through the LCOS compensator. The LCOS system may be the LCOS system of the first aspect.

The LCOS compensator may be actively aligned between -48 degrees and -77 degrees.

The method may further comprise: driving a red drive voltage onto the LCOS for generating a red portion of the display light, wherein the calibrated voltage is a green drive voltage for generating a green portion of the display light; and driving a blue drive voltage onto the LCOS for generating a blue portion of the display light, wherein the red drive voltage, the green drive voltage, and the blue drive voltage are calibrated to increase a contrast of the red portion, the green portion, and the blue portion, respectively, of the display light.

The blue drive voltage may be higher than the green drive voltage. The green drive voltage may be higher than the red drive voltage. The blue drive voltage may be higher than the red drive voltage.

The red drive voltage, the green drive voltage, and the blue drive voltage may be driven onto the LCOS sequentially in a frame of the display light. The frame may have a time duration of less than 50 ms.

### BRIEF DESCRIPTION OF THE DRAWINGS

Non-limiting and non-exhaustive examples of the invention are described with reference to the following figures, wherein like reference numerals refer to like parts throughout the various views unless otherwise specified.
FIG. 1 illustrates a head mounted display (HMD) that may include an LCOS system including an LCOS compensator, in accordance with aspects of the disclosure.
FIG. 2 illustrates an example LCOS system that includes an LCOS and an LCOS compensator, in accordance with aspects of the disclosure.
FIGs. 3A and 3B illustrate example implementations of an LCOS compensator, in accordance with aspects of the disclosure.
FIG. 4 illustrates an example LCOS system and a cross section of a portion of an example LCOS, in accordance with aspects of the disclosure.
FIG. 5 illustrates an example LCOS system that includes an LCOS compensator disposed between a lens and an LCOS, in accordance with aspects of the disclosure.
FIG. 6 illustrates an example LCOS system that includes an LCOS compensator coupled to an LCOS, in accordance with aspects of the disclosure.
FIG. 7 illustrates a flow chart of an example process of generating display light with an LCOS system that includes an LCOS compensator, in accordance with aspects of the disclosure.

### DETAILED DESCRIPTION

Examples of compensation for Liquid Crystal on Silicon (LCOS) displays are described herein. In the following description, numerous specific details are set forth to provide a thorough understanding of the examples. One skilled in the relevant art will recognize, however, that the techniques described herein can be practiced without one or more of the specific details, or with other methods, components, materials, etc. In other instances, well-known structures, materials, or operations are not shown or described in detail to avoid obscuring certain aspects.

Reference throughout this specification to "one example" or "an example" means that a particular feature, structure, or characteristic described in connection with the example is included in at least one example of the present invention. Thus, the appearances of the phrases "in one example" or "in an example" in various places throughout this specification are not necessarily all referring to the same example. Furthermore, the particular features, structures, or characteristics may be combined in any suitable manner in one or more examples.

In some implementations of the disclosure, the term "near-eye" may be defined as including an element that is configured to be placed within 50 mm of an eye of a user while a near-eye device is being utilized. Therefore, a "near-eye optical element" or a "near-eye system" would include one or more elements configured to be placed within 50 mm of the eye of the user.

In aspects of this disclosure, visible light may be defined as having a wavelength range of approximately 380 nm - 700 nm. Non-visible light may be defined as light having wavelengths that are outside the visible light range, such as ultraviolet light and infrared light. Infrared light having a wavelength range of approximately 700 nm - 1 mm includes near-infrared light. In aspects of this disclosure, near-infrared light may be defined as having a wavelength range of approximately 700 nm - 1.6 µm.

In aspects of this disclosure, the term "transparent" may be defined as having greater than 90% transmission of light. In some aspects, the term "transparent" may be defined as a material having greater than 90% transmission of visible light.

LCOS displays are generally considered a microdisplay technology and are sometimes used in small form-factor devices. LCOS systems often include illumination light illuminating an array of liquid crystals applied to a silicon-based mirror substrate that can be selectively modulated by driving images onto different pixels in the LCOS array. LCOS systems are generally considered to have a strong contrast ratio. However, in certain contexts, it is desirable to have an even higher contrast ratio for an LCOS display. One example context is Augmented Reality (AR) headsets. In this particular context, achieving a sufficient dark state of the display to achieve high contrast ratios is desirable. The AR context may be a unique context where there is desire to achieve a very high contrast LCOS display system because bright lighting environment (e.g. sunlight) that is incident on AR glasses (and also passed through to the eye of the user) may make the contrast ratio of virtual images included in the display light generated by the LCOS display system be susceptible to being washed out by the bright lighting environment. In dark light environments, high contrast ratio for AR headsets may also be important where leakage light may be more visible to the eye.

In implementations of the disclosure, an LCOS compensator may be used to improve the contrast ratio of display light. The slow axis of the LCOS compensator may be passively aligned to between -33 degrees and -57 degrees. In some implementations, the slow axis of the LCOS compensator may be approximately -45 degrees. This may allow for the LCOS compensator to be passively aligned instead of being actively aligned with respect to the LCOS display. Active alignment in the manufacturing process may take more time and may require specialized tooling. Secondly, active alignment may necessarily require a larger form factor since the rotation of an LCOS compensator with respect to the LCOS may require keep-out zones around the LCOS so that the LCOS compensator can be rotated during active alignment procedures.

In implementations of the disclosure, an LCOS compensator may be actively aligned. In some implementations, the slow axis of the LCOS compensator may be actively aligned between -48 degrees and -77 degrees. In some implementations, the slow axis of the LCOS compensator may be between -48 degrees and -72 degrees. In some implementations, the slow axis of the LCOS compensator may be approximately - 60 degrees. In some implementations, the slow axis of the LCOS compensator may be actively aligned between -53 degrees and -77 degrees. In some implementations, the slow axis of the LCOS compensator may be approximately -65 degrees.

In an implementation of the disclosure, a combination of active alignment of an LCOS compensator and voltage calibration of LCOS driving voltage(s) is utilized. In this implementation, the LCOS compensator may be actively aligned during a fabrication process and a voltage calibration may be applied at final assembly of a device. Ambient temperature calibration can also be implemented to improve a contrast ratio of a device in response to the environment.

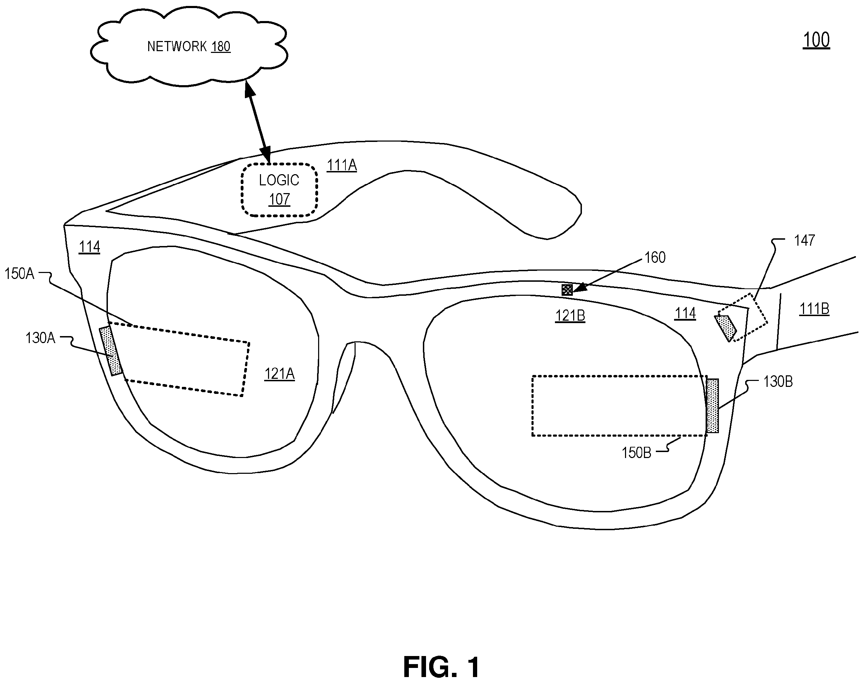

In implementations of the disclosure, the LCOS compensator may be passively aligned and a calibrated voltage (for modulating illumination light) may be driven onto the LCOS to increase a contrast of the display light generated by the LCOS. The calibrated voltage may be calibrated for an individual placement of the LCOS compensator, which allows the LCOS compensator to be passively aligned. The calibrated voltage can be fined tuned for each individual unit to increase the contrast ratio. In some implementations, there is a different calibrated voltage for red, green, and blue (RGB) channels of the display light. These and other examples are described in more detail in connection with FIGs. 1-7.

FIG. 1 illustrates a head mounted display (HMD) 100 that may include an LCOS system including an LCOS compensator, in accordance with aspects of the present disclosure. HMD 100 includes frame 114 coupled to arms 111A and 111B. Lens assemblies 121A and 121B are mounted to frame 114. Lens assemblies 121A and 121B may include a prescription lens matched to a particular user of HMD 100. The illustrated HMD 100 is configured to be worn on or about a head of a wearer of HMD 100.

In the HMD 100 illustrated in FIG. 1, each lens assembly 121A/121B includes a waveguide 150A/150B to direct image light generated by displays 130A/130B to an eyebox region for viewing by a user of HMD 100. Displays 130A/130B may include a liquid crystal on silicon (LCOS) display for directing image light to a wearer of HMD 100 to present virtual images, for example. The LCOS display may include an LCOS compensator.

Lens assemblies 121A and 121B may appear transparent to a user to facilitate augmented reality or mixed reality to enable a user to view scene light from the environment around them while also receiving image light directed to their eye(s) by, for example, waveguides 150. Lens assemblies 121A and 121B may include two or more optical layers for different functionalities such as display, eye-tracking, and optical power. In some examples, image light from display 130A or 130B is only directed into one eye of the wearer of HMD 100. In an example, both displays 130A and 130B are used to direct image light into waveguides 150A and 150B, respectively.

Frame 114 and arms 111 may include supporting hardware of HMD 100 such as processing logic 107, a wired and/or wireless data interface for sending and receiving data, graphic processors, and one or more memories for storing data and computer-executable instructions. Processing logic 107 may include circuitry, logic, instructions stored in a machine-readable storage medium, ASIC circuitry, FPGA circuitry, and/or one or more processors. In one example, HMD 100 may be configured to receive wired power. In one example, HMD 100 is configured to be powered by one or more batteries. In one example, HMD 100 may be configured to receive wired data including video data via a wired communication channel. In one example, HMD 100 is configured to receive wireless data including video data via a wireless communication channel. Processing logic 107 may be communicatively coupled to a network 180 to provide data to network 180 and/or access data within network 180. The communication channel between processing logic 107 and network 180 may be wired or wireless.

In the illustrated implementation of FIG. 1, HMD 100 includes a camera 147 configured to image an eyebox region. In some implementations, an illumination module 160 may illuminate the eyebox region with near-infrared illumination light to assist camera 147 in imaging the eyebox region for eye-tracking purposes. Camera 147 may include a lens assembly configured to focus image light to a complementary metal-oxide semiconductor (CMOS) image sensor, in some implementations. A near-infrared filter that receives a narrow-band near-infrared wavelength may be placed over the image sensor so it is sensitive to the narrow-band near-infrared wavelength while rejecting visible light and wavelengths outside the narrow-band. Near-infrared illuminators (not illustrated) such as near-infrared LEDs or lasers that emit the narrow-band wavelength may be included in illumination module 160 to illuminate the eyebox region with the narrow-band near-infrared wavelength.

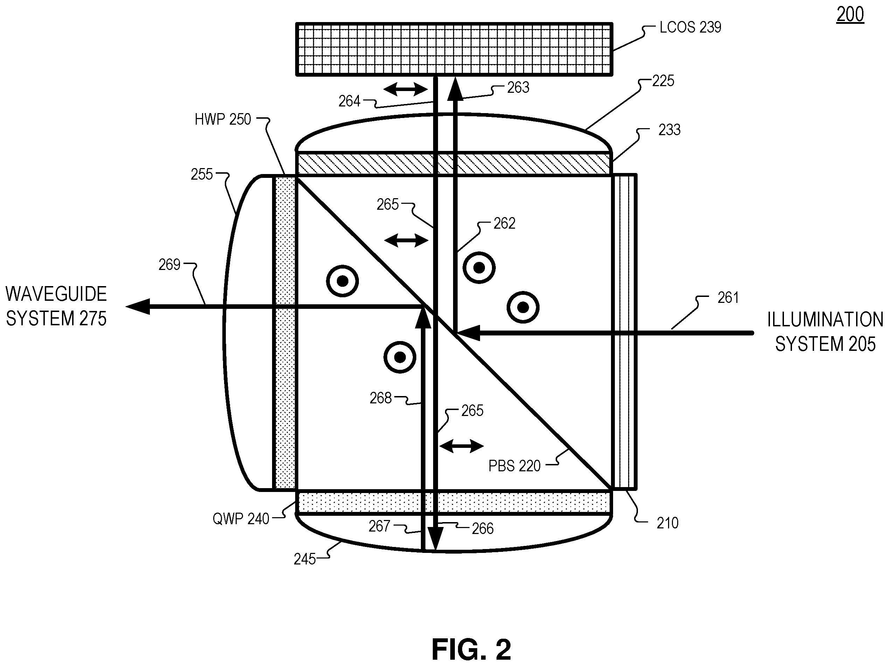

FIG. 2 illustrates an example LCOS system 200 that includes an LCOS 239 and an LCOS compensator 233, in accordance with aspects of the disclosure. FIG. 2 is merely an example configuration of an LCOS system and aspects of the disclosure may be implemented in a variety of different LCOS systems.

Example LCOS system 200 includes an illumination system 205, a pre-polarizer 210, a polarized beam splitter (PBS) 220, an LCOS compensator 233, a lens 225, an LCOS 239, a quarter-waveplate (QWP) 240, a reflector 245, a half-waveplate (HWP) 250, a lens 255, and a waveguide system 275.

Illumination system 205 may include light sources such as LEDs or lasers. In some implementations, illumination system 205 includes more than one color channel so that the display light generated by LCOS system 200 includes color images. In some implementations, illumination system 205 includes red, green, and blue (RGB) light sources that emit light sequentially and the red, green, and blue portions of an image are driven onto LCOS 239 in concert with illumination system 205 sequentially emitting the red, green, and blue illumination light.

In operation, light is emitted from illumination system 205 and propagates along optical path 261 toward pre-polarizer 210. Pre-polarizer 210 passes a first linear polarization orientation of the light so the illumination light has a homogeneous polarization orientation. PBS 220 is configured to reflect the first linear polarization orientation and pass a second linear polarization orientation that is orthogonal to the first linear polarization orientation. Thus, the illumination light having the first linear polarization orientation reflects off of PBS 220 and is redirected toward LCOS 239 along optical path 262.

In FIG. 2, the illumination light propagating along optical path 262 encounters LCOS compensator 233 disposed between PBS 220 and LCOS 239. LCOS compensator 233 is configured to receive the illumination light. LCOS compensator 233 is configured to assist in providing a better dark state for display light generated by LCOS 239.

LCOS compensator 233 may have a slow axis passively aligned to between -33 degrees and -57 degrees. In some implementations, the LCOS compensator 233 has a slow axis passively aligned to approximately -45 degrees. The passive alignment of the LCOS compensator 233 with respect to LCOS 239 may allow for calibrated voltages to be used to drive liquid crystals in LCOS 239 to an optimal orientation to increase the contrast of LCOS 239, as will be discussed in more detail below.

LCOS compensator 233 may have a slow axis actively aligned to between -48 degrees and -77 degrees. In some implementations, the LCOS compensator 233 has a slow axis that is actively aligned to between -48 degrees and -72 degrees. In some implementations, the LCOS compensator 233 has a slow axis actively aligned to approximately -60 degrees. In some implementations, the slow axis of the LCOS compensator may be between -53 degrees and -77 degrees. In some implementations, the slow axis of the LCOS compensator may be approximately -65 degrees. The active alignment of the LCOS compensator 233 with respect to LCOS 239 may allow for calibrated voltages to be used to drive liquid crystals in LCOS 239 to an optimal orientation to increase the contrast of LCOS 239.

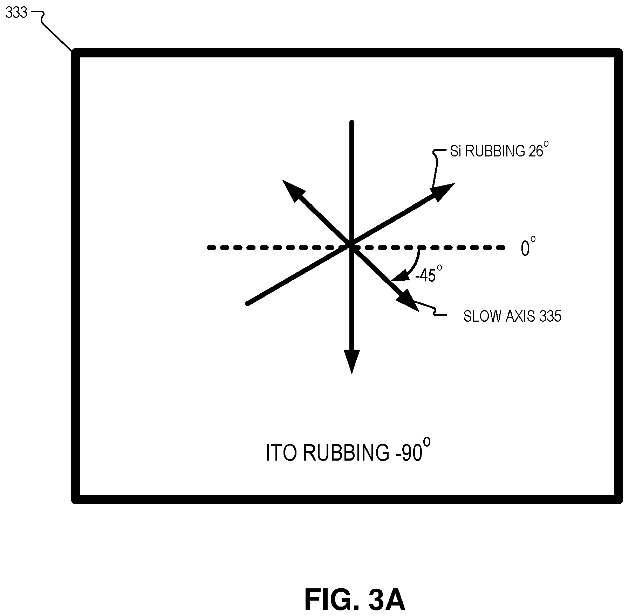

FIG. 3A illustrates an example implementation of an LCOS compensator 333, in accordance with aspects of the disclosure. In FIG. 3A, LCOS compensator 333 has a slow axis 335 of approximately -45 degrees with respect to an indium titanium oxide (ITO) layer rubbing orientation of -90 degrees and a silicon (Si) layer rubbing orientation of 26 degrees. The ITO layer and the Si layer are included in LCOS 239. While example LCOS compensator 333 is shown as having slow axis 335 passively aligned to approximately -45 degrees, LCOS compensator 333 may have a slow axis passively aligned to between -33 degrees and -57 degrees. In some implementations, a calibrated voltage driven onto LCOS 239 can account for the LCOS compensator 233 being aligned at different angles. Using a calibrated voltage may obviate the need to mechanically rotate LCOS compensator 233 with respect to LCOS 239, in some implementations.

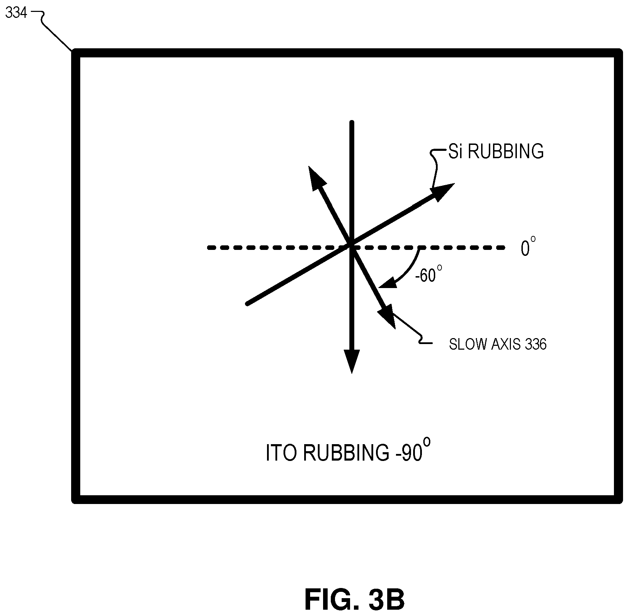

FIG. 3B illustrates an example implementation of an LCOS compensator 334 that may be used in active alignment implementations, in accordance with aspects of the disclosure. In FIG. 3B, LCOS compensator 334 has a slow axis 336 of approximately - 60 degrees with respect to the defined zero degrees illustrated in FIG. 3B and the defined zero degrees is 90 degrees with respect to an indium titanium oxide (ITO) glass rubbing direction. In some implementations, the rubbing may be performed on a polymide layer instead of an ITO layer or silicon layer. The polymide layer may be coated on two substrates (e.g. one is being glass coated with ITO and the other is a silicon substrate with multi layers of transistor). The ITO layer and the Si layer are included in LCOS 239. While example LCOS compensator 334 is shown as having slow axis 336 actively aligned to approximately -60 degrees, LCOS compensator 334 may have a slow axis actively aligned to between -48 degrees and -72 degrees. In some implementations, LCOS compensator 334 may have a slow axis actively aligned to between -53 degrees and -77 degrees. In some implementations, slow axis 336 is actively aligned to approximately -65 degrees. In some implementations where the LCOS compensator 234 is actively aligned, calibrated voltage(s) are also driven onto LCOS 239 to increase the brightness contrast ratio.

Referring back to FIG. 2, compensated illumination light 263 encounters LCOS 239 after propagating through LCOS compensator 233. In some implementations, a lens 225 may be disposed between LCOS compensator 233 and LCOS 239. Lens 225 may be a refractive lens. Lens 225 may be considered a field lens.

LCOS 239 receives compensated illumination light 263 and is configured to modulate the compensate illumination light to generate display light. Images may be driven on an LCOS pixel array of LCOS 239. The LCOS pixel array may be arranged in rows and columns and each LCOS pixel in the LCOS pixel array may be modulated to reflect light or to block light. To generate color images, a red image sub-frame, a green image sub-frame, and a green image sub-frame may be sequentially driven onto LCOS 239 to generate a color image frame. The time duration of the color image frame may be less than 50 ms. The sub-frames may be approximately a third of the time of the time duration of the color image frame. In some implementations, the time duration of the color frame is approximately 33 ms, which corresponds with a frame rate of approximately 30 Hz. In some implementations, the time duration of the color frame is approximately 16 ms, which corresponds with a frame rate of approximately 60 Hz. In some implementations, the time duration of the color frame is approximately 8 ms, which corresponds with a frame rate of approximately 120 Hz.

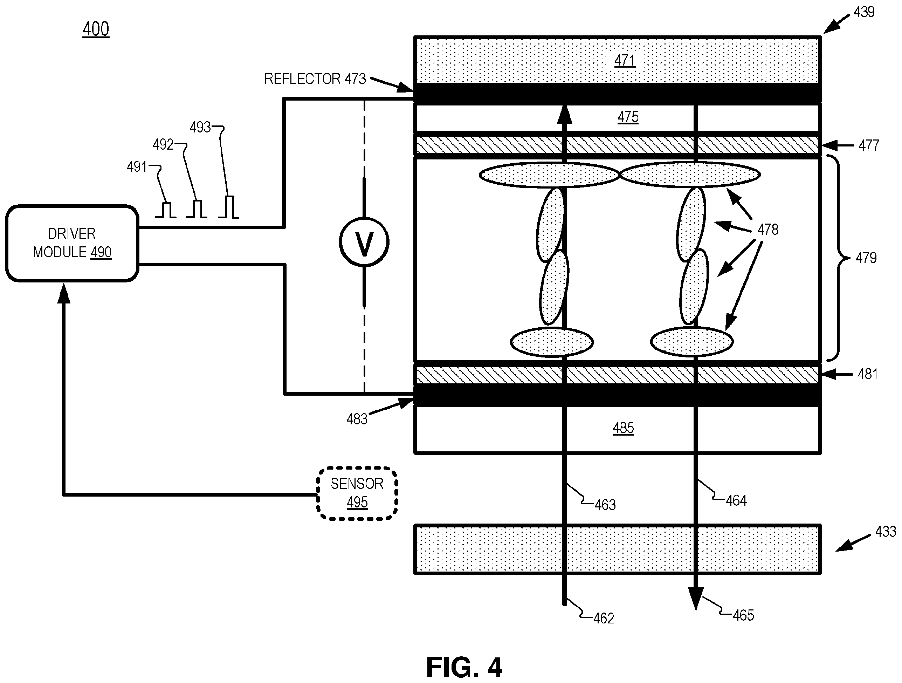

FIG. 4 illustrates an example LCOS system 400 and a cross section of a portion of an example LCOS 439, in accordance with aspects of the disclosure. LCOS system 400 includes driver module 470, LCOS 439, and LCOS compensator 433. LCOS 439 includes a Si layer 471, a reflector layer 473, a highly-reflective (HR) coating 475, a first polyimide (PI) alignment layer 477, a liquid crystal layer 479, a second PI alignment layer 481, a transparent electrode layer 483, and a glass layer 485. Reflector layer 473 may include aluminum. Transparent electrode layer 483 may include indium tin oxide (ITO), for example. LCOS compensator 433 may have similar properties as described with respect to LCOS compensator 233, 333, or 334.

In operation, a voltage applied across reflector 473 and transparent electrode layer 483 changes the orientation of liquid crystals 478 in liquid crystal layer 479. LCOS 439 may be operated in twisted nematic (TN) mode. TN mode is normally white and can be switched to black when a voltage is applied across reflector 473 and transparent electrode layer 483. LCOS 439 may be operated in vertically aligned (VA) mode. Traditionally, because of residual retardation, LCOS displays struggle to reach a truly dark state, which reduces the contrast of the display light. Therefore, an LCOS compensator may be used to achieve an improved dark state that contributes to better contrast.

After an LCOS compensator is installed in an LCOS system, a calibrated voltage level may be generated that maximizes or significantly improves the contrast ratio for the display light generated by an LCOS system. Calibrated voltage level(s) may be driven onto LCOS systems having a passively aligned or an actively aligned LCOS compensator. Since the voltage driven onto the LCOS modulates the orientation of the liquid crystals 478, the ideal dark voltage for each LCOS system can be ascertained by testing what voltage level provides the best dark states (as manifested by optical testing). Of course, generating the darkest dark states for the LCOS system then increases the contrast ratio of display light generated by the LCOS system. Utilizing the systems and techniques of the disclosure, the contrast ratio of the brightest state to the darkest state for each of the red, green, and blue channels may be above 1000:1.

In FIG. 4, driver module 490 is configured to drive a dark voltage (or dark voltages) onto LCOS 439. The voltage may be a calibrated voltage to generate the darkest dark states of LCOS 439. In some implementations, the ideal dark voltage is calibrated over a temperature range of LCOS system 400 so that the dark voltage driven onto pixels of LCOS 439 are ideal (or approaching ideal) even when temperature changes influence the LCOS system 400. LCOS system 400 may include a temperature sensor 495 configured to provide a temperature measurement to driver module 490. In an implementation, a red drive voltage 491, a green drive voltage 492, and a blue drive voltage 493 are calibrated over a temperature range of the LCOS system.

In some implementations, a single calibrated dark voltage is used for driving onto LCOS 439 for all three color channels. In some implementations, that single calibrated dark voltage is associated with the ideal dark state for the green image sub-frame.

In some implementations, the three color channels have individually calibrated drive voltages to generate the ideal dark state for each sub-frame. For example, driver module 490 may be configured to (1) drive a red drive voltage 491 onto LCOS 439 for generating a red image; (2) drive a green drive voltage 492 onto LCOS 439 for generating a green image; and (3) drive a blue drive voltage 493 onto LCOS 439 for generating a blue image. The red drive voltage 491, the green drive voltage 492, and the blue drive voltage 493 may be calibrated to increase a contrast of the red image, the green image, and the blue image, respectively. In some implementations, blue drive voltage 493 is higher than green drive voltage 492 and the green drive voltage 492 may be higher than the red drive voltage 491. The red drive voltage 491, the green drive voltage 492, and the blue drive voltage 493 may be a function of a mechanical orientation of the LCOS compensator 233/433 with respect to LCOS 239/439.

In FIG. 4, illumination light 462 encounters LCOS compensator 433. Illumination light 462 may be directed to LCOS compensator by a PBS 220, for example. LCOS compensator 433 receives illumination light 462 and generates compensated illumination light 463 exiting LCOS compensator 433 toward LCOS 439. The slow axis orientation of LCOS compensator 433 operates on illumination light 462 to generate compensated illumination light 463. Compensated illumination light 463 propagates through layers 485, 483, 481 and is modulated according to the orientation of liquid crystals 478. Compensated illumination light 463 continues propagating through layers 477 and 475 before being reflected by reflector layer 473 and propagating back through layers 475 and 477 and encountering liquid crystal layer 479. The light is further modulated according to the orientation of liquid crystals 478 to generate display light 464 that propagates through layers 481 483, and 485 before encountering LCOS compensator 433. Display light 464 is received by LCOS compensator 433 and exits as compensated display light 465, in FIG. 4. The slow axis orientation of LCOS compensator 433 operates on display light 464 to generate compensated display light 465. Compensated display light 465 may have a second linear polarization orientation orthogonal to the first linear polarization orientation of illumination light 462.

Returning to FIG. 2, compensated display light propagates along optical path 265. Compensated display light may have a second linear polarization orientation orthogonal to the first linear polarization orientation of illumination light propagating along optical path 262, as illustrated in FIG. 2. Since PBS 220 is configured to pass the second linear polarization orientation and reflect the first linear polarization orientation, the compensated display light (having the second linear polarization orientation) passes through PBS 220 and retains its second linear polarization orientation.

The compensated display light encounters QWP 240. QWP 240 is configured to shift the polarization axis of incident light such that linearly polarized light may be converted to circularly polarized light by QWP 240. Likewise, incident circularly polarized light may be converted to linearly polarized light by QWP 240. QWP 240 may be made of birefringent materials such as quartz, organic material sheets, or liquid crystal, for example. In one example, QWP 240 is designed to be a so called "zero order waveplate" so that the retardance imparted by the QWP 240 remains close to a quarter of a wave independent of the wavelength and angle of incidence of incoming light.

The light having the second linear polarization orientation propagating along optical path 265 is converted to circularly polarized light propagating along optical path 266 prior to encountering reflector 245. Reflector 245 may include a lensing curvature to assist in focusing the compensated display light. The circularly polarized light propagating along optical path 266 reflects off of reflector 245 which changes the orientation of the light propagating along optical path 267 to the opposite-handed circularly polarized light than that of the circularly polarized light propagating along optical path 266. The light propagating along optical path 267 is then converted to linearly polarized light by QWP 240.

As shown in FIG. 2, the light propagating along optical path 268 is in the first linear polarization orientation and is reflected by PBS 220 toward waveguide system 275. Waveguides 130A/130B in FIG. 1 may be an example of waveguide system 275. The light directed toward waveguide system 275 by PBS 220 retains its first linear polarization orientation and encounters HWP 250. HWP 250 is configured to shift the polarization axis of incident light by π/2 (90 degrees). Therefore, in some implementations, linearly polarized light may be converted by HWP 250 to an orthogonal orientation of the linearly polarized light reflecting from PBS 220 toward waveguide system 275. In other implementations, light encountering HWP 250 may be converted to a different polarization direction that is not necessarily orthogonal to the received light. HWP 250 may be designed to be a so called "zero order waveplate" so that the retardance imparted by HWP 250 remains close to half of a wave independent of the wavelength and angle of incidence of incoming light.

Waveguide system 275 is configured to receive the display light propagating along optical path 269. Waveguide system 275 may be configured to direct virtual images included in the display light to an eyebox region. The eyebox region may be the region that an eye of a user would occupy when wearing HMD 100, for example.

In FIG. 2, lens 225 is disposed between LCOS compensator 233 and LCOS 239. However, an LCOS compensator may be disposed in different locations.

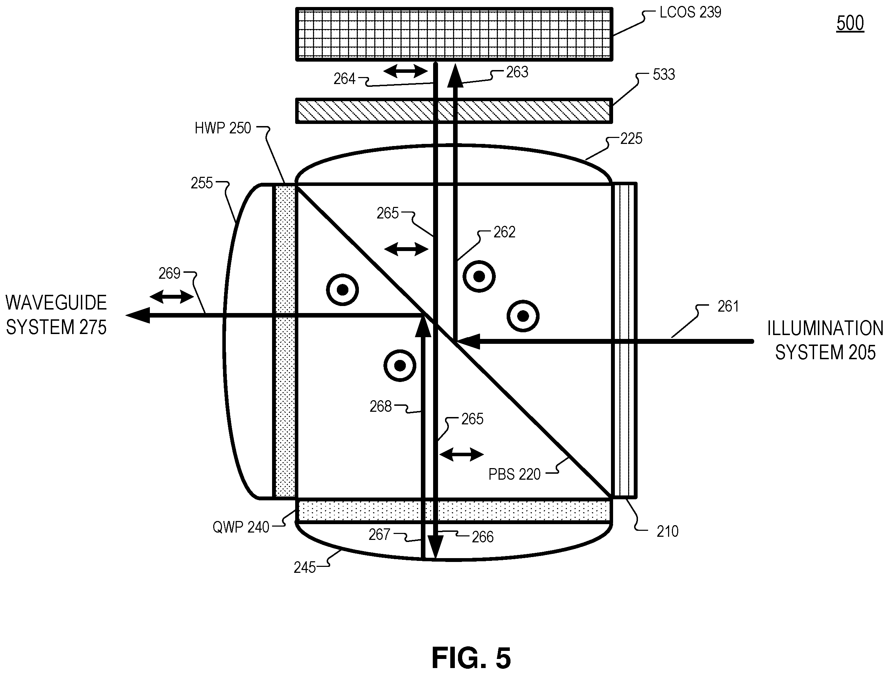

FIG. 5 illustrates an example LCOS system 500 that includes LCOS compensator 533 disposed between lens 225 and LCOS 239, in accordance with aspects of the disclosure. LCOS compensator 533 may have similar optical characteristics as described with respect to LCOS compensators 233 and/or 433.

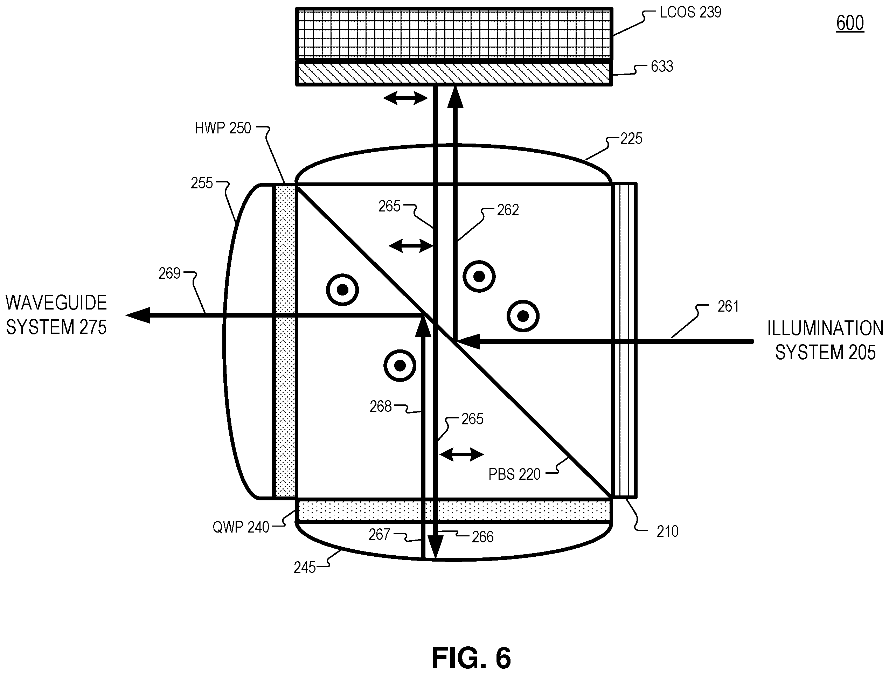

FIG. 6 illustrates an example LCOS system 600 that includes LCOS compensator 633 coupled to LCOS 239, in accordance with aspects of the disclosure. LCOS compensator 633 may be laminated to LCOS 239, in some implementations. LCOS compensator 633 may have similar optical characteristics as described with respect to LCOS compensators 233 and/or 433.

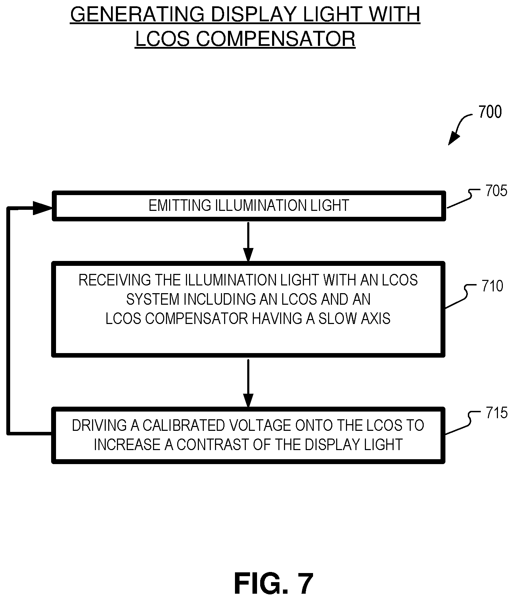

FIG. 7 illustrates flow chart of an example process 700 of generating display light with an LCOS compensator, in accordance with aspects of the disclosure. The order in which some or all of the process blocks appear in process700 should not be deemed limiting. Rather, one of ordinary skill in the art having the benefit of the present disclosure will understand that some of the process blocks may be executed in a variety of orders not illustrated, or even in parallel.

In process block 705, illumination light is emitted by an illumination system (e.g. illumination system 205). The illumination system may include light sources such as LEDs or lasers. In some implementations, the illumination system includes more than one color channel so that the display light generated by an LCOS includes color images. In some implementations, the illumination system includes red, green, and blue (RGB) light sources that emit light sequentially and the red, green, and blue portions of an image are driven onto an LCOS display in concert with the illumination system sequentially emitting the red, green, and blue illumination light.

In process block 710, the illumination light is received with a LCOS system including an LCOS and an LCOS compensator having a slow axis. The LCOS compensator may be passively or actively aligned. The illumination light propagates through the LCOS compensator to the LCOS.

In process block 715, a calibrated voltage is driven onto the LCOS to increase a contrast of the display light. Driving the calibrated voltage onto the LCOS modulates the illumination light (by way of liquid crystal modulation) into display light that propagates through the LCOS compensator. Process 700 may return to process block 705 after executing process block 715.

In implementations of the disclosure, the LCOS compensator is actively aligned at the factory and the calibrated driving voltages are used to increase the brightness contrast ratio of the LCOS system. The calibrated driving voltages may be stored in a look up table (LUT) where the calibrated drive voltages are related to a temperature of the LCOS system.

An implementation of process 700 further includes driving a red drive voltage onto the LCOS for generating a red portion of the display light and driving a blue drive voltage onto the LCOS for generating a blue portion of the display light. In this implementation, the calibrated voltage recited in process block 715 may be a green drive voltage for generating a green portion of the display light. The red drive voltage, the green drive voltage, and the blue drive voltage may be calibrated to increase a contrast of the red portion, the green portion, and the blue portion, respectively, of the display light. The blue drive voltage may be higher than the green drive voltage and the green drive voltage may be higher than the red drive voltage, in some implementations. In some implementations, the red drive voltage, the green drive voltage, and the blue drive voltage are driven onto the LCOS sequentially in a frame of the display light, where the frame has a time duration of less than 50 ms.

In some implementations of process 700, the calibrated voltage is a function of a mechanical orientation of the LCOS compensator with respect to the LCOS.

In some implementations of process 700, the illumination light has a first linear polarization orientation and the display light has a second linear polarization orientation orthogonal to the first linear polarization orientation.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, and any of which may be presented in a single channel or in multiple channels (such as stereo video that produces a three-dimensional effect to the viewer). Additionally, in some examples, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The term "processing logic" (e.g. logic 107) in this disclosure may include one or more processors, microprocessors, multi-core processors, Application-specific integrated circuits (ASIC), and/or Field Programmable Gate Arrays (FPGAs) to execute operations disclosed herein. In some examples, memories (not illustrated) are integrated into the processing logic to store instructions to execute operations and/or store data. Processing logic may also include analog or digital circuitry to perform the operations in accordance with examples of the disclosure.

A "memory" or "memories" described in this disclosure may include one or more volatile or non-volatile memory architectures. The "memory" or "memories" may be removable and non-removable media implemented in any method or technology for storage of information such as computer-readable instructions, data structures, program modules, or other data. Example memory technologies may include RAM, ROM, EEPROM, flash memory, CD-ROM, digital versatile disks (DVD), high-definition multimedia/data storage disks, or other optical storage, magnetic cassettes, magnetic tape, magnetic disk storage or other magnetic storage devices, or any other non-transmission medium that can be used to store information for access by a computing device.

Networks may include any network or network system such as, but not limited to, the following: a peer-to-peer network; a Local Area Network (LAN); a Wide Area Network (WAN); a public network, such as the Internet; a private network; a cellular network; a wireless network; a wired network; a wireless and wired combination network; and a satellite network.

Communication channels may include or be routed through one or more wired or wireless communication utilizing IEEE 802.11 protocols, short-range wireless protocols, SPI (Serial Peripheral Interface), I2C (Inter-Integrated Circuit), USB (Universal Serial Port), CAN (Controller Area Network), cellular data protocols (e.g. 3G, 4G, LTE, 5G), optical communication networks, Internet Service Providers (ISPs), a peer-to-peer network, a Local Area Network (LAN), a Wide Area Network (WAN), a public network (e.g. "the Internet"), a private network, a satellite network, or otherwise.

A computing device may include a desktop computer, a laptop computer, a tablet, a phablet, a smartphone, a feature phone, a server computer, or otherwise. A server computer may be located remotely in a data center or be stored locally.

The processes explained above are described in terms of computer software and hardware. The techniques described may constitute machine-executable instructions embodied within a tangible or non-transitory machine (e.g., computer) readable storage medium, that when executed by a machine will cause the machine to perform the operations described. Additionally, the processes may be embodied within hardware, such as an application specific integrated circuit ("ASIC") or otherwise.

A tangible non-transitory machine-readable storage medium includes any mechanism that provides (i.e., stores) information in a form accessible by a machine (e.g., a computer, network device, personal digital assistant, manufacturing tool, any device with a set of one or more processors, etc.). For example, a machine-readable storage medium includes recordable/non-recordable media (e.g., read only memory (ROM), random access memory (RAM), magnetic disk storage media, optical storage media, flash memory devices, etc.).

The above description of illustrated examples of the invention, including what is described in the Abstract, is not intended to be exhaustive or to limit the invention to the precise forms disclosed. While specific examples of, and examples for, the invention are described herein for illustrative purposes, various modifications are possible within the scope of the invention, as those skilled in the relevant art will recognize.

These modifications can be made to the invention in light of the above detailed description. The terms used in the following claims should not be construed to limit the invention to the specific examples disclosed in the specification. Rather, the scope of the invention is to be determined entirely by the following claims, which are to be construed in accordance with established doctrines of claim interpretation.

## Claims

1. A Liquid Crystal on Silicon, LCOS, system comprising:
an illumination module configured to generate illumination light;
an LCOS configured to receive the illumination light and modulate the illumination light into display light; and
an LCOS compensator having a slow axis aligned to between -33 degrees and - 77 degrees, wherein the LCOS compensator is configured to receive the illumination light and the display light.

2. The LCOS system of claim 1, wherein the illumination light has a first linear polarization orientation, and wherein the display light has a second linear polarization orientation orthogonal to the first linear polarization orientation.

3. The LCOS system of claim 1 or 2, wherein the LCOS compensator is actively aligned.

4. The LCOS system of claim 3, wherein the slow axis of the LCOS compensator is actively aligned to between -48 degrees and -77 degrees;
preferably wherein the slow axis of the LCOS compensator is actively aligned to approximately -60 degrees or approximately -65 degrees.

5. The LCOS system of claim 1 or 2, wherein the slow axis of the LCOS compensator is passively aligned to between -33 degrees and -57 degrees.

6. The LCOS system of any preceding claim, further comprising:
a driver module configured to:
drive a red drive voltage onto the LCOS for generating a red image;
drive a green drive voltage onto the LCOS for generating a green image; and
drive a blue drive voltage onto the LCOS for generating a blue image, wherein the red drive voltage, the green drive voltage, and the blue drive voltage are calibrated to increase a contrast of the red image, the green image, and the blue image, respectively.

7. The LCOS system of claim 6, wherein the blue drive voltage is higher than the green drive voltage, and wherein the green drive voltage is higher than the red drive voltage.

8. The LCOS system of claim 6 or 7, wherein the red drive voltage, the green drive voltage, and the blue drive voltage are a function of a mechanical orientation of the LCOS compensator with respect to the LCOS;
preferably wherein the red drive voltage, the green drive voltage, and the blue drive voltage are calibrated over a temperature range of the LCOS system.

9. The LCOS system of any preceding claim, wherein the LCOS compensator is laminated to the LCOS.

10. The LCOS system of any preceding claim, further comprising:
a polarized beam splitter, PBS, configured to receive the illumination light and direct the illumination light to the LCOS, wherein the LCOS compensator is disposed between the PBS and the LCOS.

11. A head-mounted display, HMD, comprising:
the LCOS system of any preceding claim; and
a waveguide system configured to receive the display light generated by the LCOS, wherein the waveguide system is configured to direct virtual images included in the display light to an eyebox region.

12. A method comprising:
emitting, with an illumination system, illumination light;
receiving the illumination light with an LCOS system including an LCOS and an LCOS compensator having a slow axis, wherein the illumination light propagates through the LCOS compensator to the LCOS; and
driving a calibrated voltage onto the LCOS to increase a contrast of display light, wherein driving the calibrated voltage onto the LCOS modulates the illumination light into display light that propagates back through the LCOS compensator.

13. The method of claim 12, wherein the LCOS compensator is actively aligned between -48 degrees and -77 degrees.

14. The method of claim 12 or 13 further comprising:
driving a red drive voltage onto the LCOS for generating a red portion of the display light, wherein the calibrated voltage is a green drive voltage for generating a green portion of the display light; and
driving a blue drive voltage onto the LCOS for generating a blue portion of the display light, wherein the red drive voltage, the green drive voltage, and the blue drive voltage are calibrated to increase a contrast of the red portion, the green portion, and the blue portion, respectively, of the display light.

15. The method of claim 14, wherein the blue drive voltage is higher than the green drive voltage, and wherein the green drive voltage is higher than the red drive voltage; preferably wherein the red drive voltage, the green drive voltage, and the blue drive voltage are driven onto the LCOS sequentially in a frame of the display light, wherein the frame has a time duration of less than 50 ms.
